# EUROPÄISCHE PATENTANMELDUNG

(11) **EP 1 691 431 A1**
(43) Veröffentlichungstag der Anmeldung: **16.08.2006**
(21) Anmeldenummer: 05113008.6
(22) Anmeldetag: 27.12.2005
(51) Int. Cl.: H01M 2/20

(54) **Verbindungselement zur Verbindung von Zellen zu Akkumulatoren**

(30) Priorität: 14.02.2005 CH 2652005
(71) Anmelder: SAT Akkumulatoren Technik AG, 3931 Eyholz (CH)
(72) Erfinder: Scotton, Daniel, 3930, Visp (CH); Collaud, Pascal, 3930, Visp (CH)
(74) Vertreter: Scheuzger, Beat Otto

(57) **Zusammenfassung**

Ein Verbindungselement zur Verbindung von Zellen besteht aus einem aus leitendem Material gebildeten plattenförmigen Element (2), das mindestens zwei einander gegenüberliegende Zungen aufweist, welche Zungen jeweils eine Verbindungsstelle aufweisen, mit welcher die jeweilige Zunge in deren Endbereich (8) mit dem entsprechenden Pol der Zelle verbindbar ist. Die jeweilige Verbindungsstelle jeder Zunge (4), (5), (6) und (7) des plattenförmigen Elementes (2) besteht aus einer Ausbuchtung (9). Diese Ausbuchtung (9) weist eine Länge auf, die mindestens dem 1,5-fachen der Breite der Ausbuchtung (9) entspricht. Die Zungen des Verbindungselementes sind durch Widerstandsschweissen mit dem jeweiligen Pol der entsprechenden Zelle verbindbar.

## Beschreibung

Die vorliegende Erfindung bezieht sich auf ein Verbindungselement zur Verbindung von Zellen zu Akkumulatoren, bestehend aus einem aus leitendem Material gebildeten plattenförmigen Element, das mindestens zwei einander gegenüberliegende Zungen aufweist, welche Zungen jeweils eine Verbindungsstelle aufweisen, mit welcher die jeweilige Zunge in deren Endbereich mit dem entsprechenden Pol der Zelle verbindbar ist.

Derartige, aus einzelnen Zellen zusammengesetzte Akkumulatoren werden in verschiedensten Anwendungen eingesetzt. Hierzu werden mehrere Zellen miteinander verbunden, seriell und/oder parallel, je nach Anwendungsfall. Zur Verbindung der einzelnen Zellen werden Verbindungselemente verwendet, an deren Zungen in den Endbereichen punktförmige Erhebungen angebracht sind. Diese punktförmigen Erhebungen dienen beim Widerstandsschweissen als Verbindungsstelle zwischen dem jeweiligen Pol der entsprechenden verbindbaren Zelle und dem Verbindungselement. Es entsteht eine punktförmige Schweissstelle. Dadurch können aus mehreren Zellen Akkumulatoren zusammengestellt werden, die die gewünschten Eigenschaften aufweisen.

Wie bereits erwähnt worden ist, können derartige Akkumulatoren für die verschiedensten Anwendungen eingesetzt werden, beispielsweise auch bei akkugetriebenen Handwerkzeugen. Hierbei können diese Akkumulatoren auch grossen mechanischen Belastungen ausgesetzt werden, zum Beispiel beim Einsatz in Schlagbohrmaschinen sind diese Akkumulatoren grossen Vibrationen unterworfen.

Bei derartigen Einsätzen hat es sich gezeigt, dass die oben beschriebenen bekannten punktförmigen Verbindungsstellen den Anforderungen nicht immer gewachsen sind. Die Verbindungen können aufgrund der mechanischen Beanspruchung zerstört werden, der Akkumulator ist nicht mehr einsetzbar.

Die Aufgabe der vorliegenden Erfindung besteht nun darin, die Verbindungselemente so zu gestalten, dass mit den jeweiligen Polen der miteinander zu verbindenden Zellen eine Verbindung erreicht werden kann, welche die höheren mechanischen Beanspruchungen ohne Schaden zu nehmen aushalten können.

Erfindungsgemäss erfolgt die Lösung dieser Aufgabe dadurch, dass die jeweilige Verbindungsstelle jeder Zunge des plattenförmigen Elementes aus einer Ausbuchtung besteht, welche eine Länge aufweist, die mindestens dem 1,5-fachen der Breite der Ausbuchtung entspricht, über welche die Zungen des Verbindungselementes durch Widerstandsschweissen mit dem jeweiligen Pol der entsprechenden Zelle verbindbar sind.

Mit derartig ausgestalteten Verbindungsstellen wird zwischen dem Verbindungselement und dem entsprechenden Pol der Zelle eine sehr starke Verbindung erhalten, die auch langzeitig auftretende, starke Vibrationen aushalten können. Dadurch wird die Qualität des entsprechenden Akkumulators massiv gesteigert.

In vorteilhafter Weise ist die Ausbuchtung jeder Zunge mittig angebracht und weist eine Breite auf, die etwa einem Drittel der Zungenbreite entspricht. Durch diese Anordnungen wird die Zunge beim Anbringen der Ausbuchtung nicht geschwächt, was sich positiv auf die Verbindung mit der entsprechenden Zelle auswirkt.

In vorteilhafter Weise ist die Länge jeder Ausbuchtung einer Zunge doppelt so gross, wie die Breite der Zunge, wodurch eine optimale Festigkeit sowohl der Zunge als auch der Verbindung mit dem entsprechenden Pol der Zelle erhalten wird.

In vorteilhafter Weise wird das Verbindungselement aus einem elektrolytisch vernickeltem Kaltband hergestellt, vorzugsweise durch Ausstanzung, wodurch sich eine sehr einfache und günstige Herstellungsform ergibt.

Eine weitere vorteilhafte Ausgestaltung der Erfindung besteht darin, dass die Ausbuchtung durch Prägung erreichbar ist. Dieser Prägungsvorgang kann in den Stanzvorgang integriert sein, der Prägungsvorgang kann aber auch anschliessend an die Stanzung ausgeführt werden.

In vorteilhafter Weise sind die Verbindungselemente mit jeweils zwei parallel zueinander verlaufenden, parallel nebeneinander angeordneten Zungen ausgestattet. Hierdurch ergibt sich eine massiv bessere Festigkeit der Verbindungsstellen.

Eine weitere vorteilhafte Ausgestaltung der Erfindung besteht darin, dass diese Verbindungselemente einen Mittelteil aufweisen, an dessen Enden jeweils zwei Paare von Zungen angebracht sind, wobei jeweils ein Paar von Zungen parallel und zum anderen Paar gegenüberliegend angeordnet ist. Dadurch lassen sich in optimaler Weise jeweils zwei Zellen parallel verbinden.

Eine weitere vorteilhafte Ausgestaltung der Erfindung besteht darin, dass die jeweils zwei Paare von Zungen bezüglich des Mittelteils um einen Winkel geneigt sind, vorzugsweise etwa um 42°, wodurch sich die derart miteinander verbundenen Zellen in einer dichtest möglichen Anordnung verbinden lassen, wodurch der Platzbedarf minimal wird.

Ausführungsformen der Erfindung werden nachfolgend anhand der beiliegenden Zeichnung beispielhaft näher erläutert. Es zeigt:
Fig. 1 in räumlicher Darstellung eine erste Ausführungsform eines erfindungsgemässen Verbindungselementes;
Fig. 2 eine Draufsicht auf das erfindungsgemässe Verbindungselement gemäss Fig. 1;
Fig. 3 eine Schnittdarstellung durch das Verbindungselement gemäss Fig. 2 entlang Linie III-III;
Fig. 4 eine Schnittdarstellung durch das Verbindungselement gemäss Fig. 2 entlang Linie IV-IV;
Fig. 5 in räumlicher Darstellung eine weitere Ausführungsform des erfindungsgemässen Verbindungselementes;
Fig. 6 eine Draufsicht auf eine Anzahl von seriell verbundenen Zellen zu einem Akkumulator mit der ersten Ausführungsform des erfindungsgemässen Verbindungselementes;
Fig. 7 eine Draufsicht auf parallel und seriell miteinander verbundene Zellen zu einem Akkumulator mit der zweiten Ausführungsform des erfindungsgemässen Verbindungselementes; und
Fig. 8 eine räumliche Darstellung der miteinander verbundenen Zellen gemäss Fig. 7.

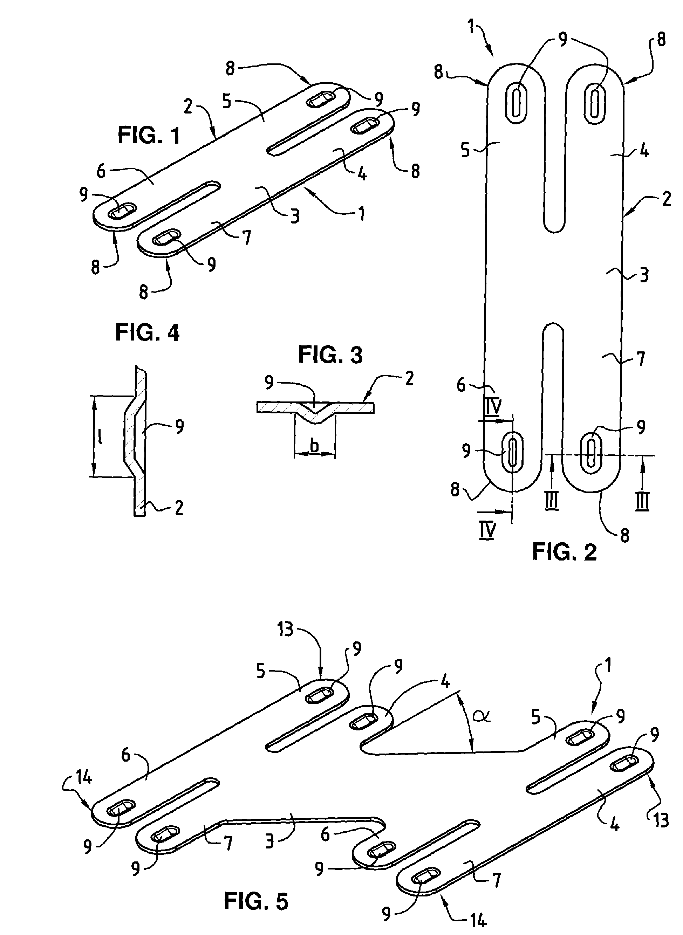

Aus den Figuren 1 und 2 ist eine erste Ausführungsform eines erfindungsgemässen Verbindungselementes 1 ersichtlich. Dieses Verbindungselement 1 besteht aus einem plattenförmigen Element 2, das mit einem Mittelteil 3 versehen ist, an welchem Zungen 4, 5, 6 und 7 angeordnet sind. Jeweils zwei Zungen 4 und 5 bzw. 6 und 7 sind parallel zueinander ausgerichtet, und sind jeweils den anderen Zungen gegenüberliegend angeordnet.

Jede der Zungen 4, 5, 6 und 7 ist am jeweiligen Endbereich 8 mit einer Ausbuchtung 9 versehen, die später noch im Detail beschrieben werden.

Das hier dargestellte Ausführungsbeispiel ist aus einem elektrolytisch vernickelten Kaltband (zum Beispiel Hilumin) gefertigt, diese Fertigung kann durch Ausstanzung erfolgen. Das Kaltband weist eine Dicke von etwa 0,3 mm auf, die Gesamtlänge des Verbindungselementes beträgt etwa 25 mm, die Breite etwa 8 mm. Die Breite der Zungen 4, 5, 6 und 7 beträgt etwa 3,4 mm, der Abstand zwischen den beiden nebeneinander angeordneten Zungen beträgt somit etwa 1,2 mm.

Wie aus den Fig. 3 und 4 entnommen werden kann, weist jede Ausbuchung 9 eine Breite b auf, die im vorliegenden Ausführungsbeispiel etwa 1,2 mm beträgt. Die Länge I dieser Ausbuchtung beträgt etwa 2,4 mm, in diesem Ausführungsbeispiel ist somit die Länge dieser Ausbuchtung doppelt so lang wie die Breite. Die Tiefe dieser Ausbuchtung 9 beträgt etwa 0,3 mm, diese Ausbuchtungen im hier dargestellten Verbindungselement 1 können beispielsweise durch Prägung erreicht werden.

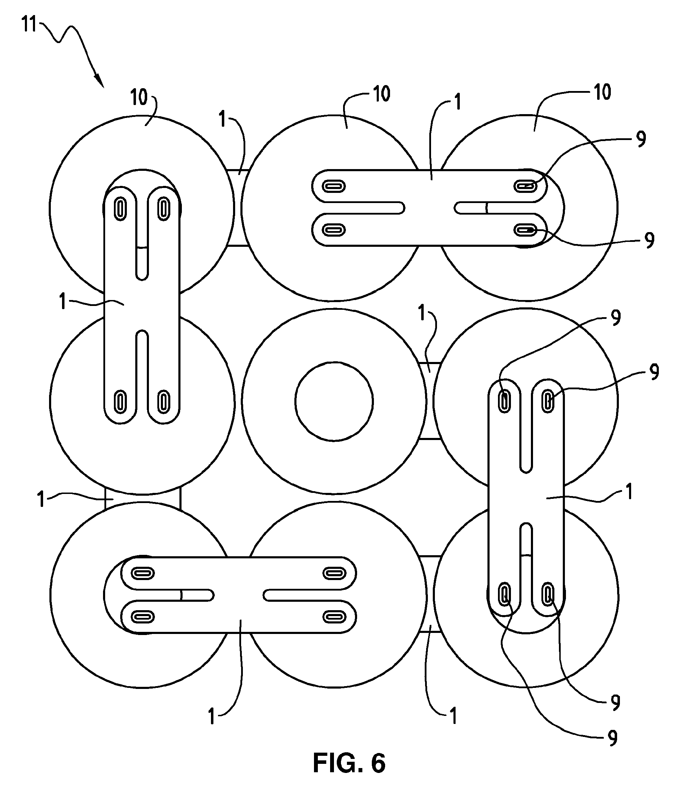

Das in den Fig. 1 und 2 dargestellte Verbindungselement 1 wird zur Verbindung von Zellen 10 zu einem Akkumulator 11 verwendet, wie dies aus Fig. 6 ersichtlich ist. Die hier dargestellten Zellen 10 sind in Serie geschaltet, dies bedeutet, dass immer ein Pluspol einer Zelle mit einem Minuspol der benachbarten Zelle über jeweils ein Verbindungselemente 1 verbunden ist. Die Befestigung der Verbindungselemente 1 mit den jeweiligen Polen der Zellen 10 erfolgt über Widerstandsschweissung. Hierzu wird das jeweilige Verbindungselement 1 mit den Ausbuchtungen 9 gegen den entsprechenden Pol gerichtet auf die Zelle gelegt und durch Widerstandsschweissen wird das Verbindungselement mit dem entsprechenden Pol der jeweiligen Zelle 10 verbunden. Durch die Ausgestaltung der Ausbuchtung 9, wie diese zu den Fig. 3 und 4 beschrieben worden ist, erhält man pro Pol zwei Schweissflächen, die etwa den Aussenabmessungen der jeweiligen Ausbuchtung 9 entsprechen. Diese Schweissflächen sind dadurch so gross, dass sie verschiedenen mechanischen Belastungen, welchen ein derartiger Akkumulator ausgesetzt werden kann, widerstehen können. Der so mit Verbindungselementen 1 hergestellte Akkumulator 11 erhält somit eine diesbezüglich lange Lebensdauer.

Fig. 5 zeigt ein weiteres Ausführungsbeispiel eines erfindungsgemässen Verbindungselementes 1. Bei der Beschreibung dieses weiteren Ausführungsbeispiels werden für gleiche Elemente die gleichen Bezugszeichen verwendet, wie beim ersten Ausführungsbeispiel. Dieses Verbindungselement 1 weist ebenfalls einen Mittelteil 3 auf, an dessen Enden 12 jeweils zwei Paare 13 und 14 von Zungen 4, 5, 6 und 7 angeordnet sind. Jeweils ein Paar 13 von Zungen 5, 6, 7 und 8 ist parallel zum anderen Paar 14 von Zungen 5, 6, 7 und 8 gegenüberliegend angeordnet. Jede dieser Zungen 4, 5, 6 und 7 ist, entsprechend dem ersten Ausführungsbeispiel, mit jeweils einer Ausbuchtung 9 versehen. Die Zungenpaare 13 und 14 sind jeweils bezüglich des Mittelteils 3 des Verbindungselementes um einen Winkel α in der Grössenordnung von etwa 42° geneigt. Auch dieses weitere Ausführungsbeispiel eines Verbindungselementes 1 ist aus einem elektrolytisch vernickelten Kaltband hergestellt, vorzugsweise durch Ausstanzung. Die Gesamtlänge der Zungen beträgt hierbei wiederum etwa 25 mm, die Gesamtbreite dieses Verbindungselementes 1 beträgt ebenfalls etwa 25 mm. Die Abmessungen der Zungen 4, 5, 6 und 7 entsprechen den Abmessungen der Zungen 4, 5, 6 und 7 des ersten Ausführungsbeispiels. Ebenfalls die Ausbuchtungen 9 weisen die selben Abmessungen auf, wie beim ersten Ausführungsbeispiel.

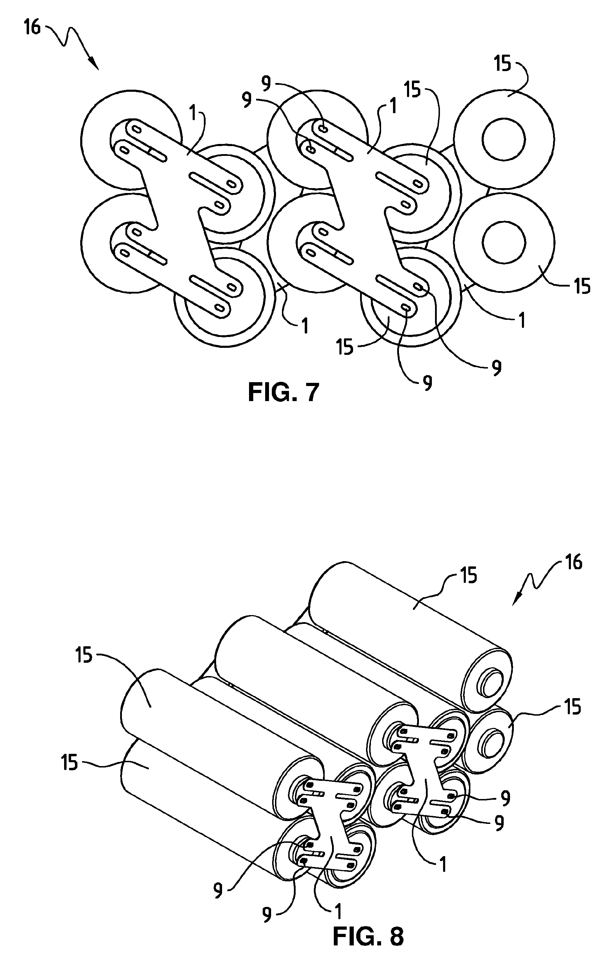

Wie aus den Figuren 6 und 7 ersichtlich ist, werden derartige Verbindungselemente 1 ebenfalls zur Verbindung von Zellen 15 zu einem Akkumulator 16 verwendet. Hierbei werden jeweils zwei Zellen parallel geschaltet, die jeweils parallel geschalteten Zellen werden dann seriell verbunden. Durch die Ausgestaltung dieser Verbindungselemente 1 werden die Zellen 15 jeweils versetzt zueinander ausgerichtet. Man erhält somit eine sehr dichte Packung von Zellen 15, der Platzbedarf eines derartigen Akkumulators 16 wird gering.

Auch hier werden zum Verbinden dieser Zellen 15 die Verbindungselemente so auf die jeweiligen Pole der Zellen 15 gelegt, dass die Ausbuchtungen 9 gegen die Zellen 15 gerichtet sind. Durch Widerstandsschweissen erhält man auch hier eine grossflächige Verbindung, die etwa den Abmessungen der Ausbuchtungen 9 entsprechen. Auch hier wird somit eine Verbindung der einzelnen Zellen miteinander erhalten, die sehr grossen mechanischen Beanspruchungen unterworfen werden können, ohne dass sich die Verbindungsstellen lösen. Derartige Verbindungselemente werden vorzugsweise zur Verbindung von Sekundärzellen, die wieder aufladbar sind, zu Akkumulatoren verwendet. Hierbei wird gewährleistet, dass diese wieder aufladbaren Akkumulatoren eine lange Lebensdauer haben, insbesondere auch bezüglich mechanischer Belastungen, die die Verbindungsstellen beanspruchen. Selbstverständlich können derartige Verbindungselemente aber auch zur Verbindung von Primärzellen (nicht wieder aufladbar) zu Batterien verwendet werden.

Insbesondere bei Zugbeanspruchung, die auf die Verbindungsstellen ausgeübt wurde, konnte festgestellt werden, dass bei den vorliegenden Ausführungsformen wesentlich höhere Zugkräfte aufgenommen werden können, als bei Verbindungselementen gemäss dem Stand der Technik.

## Patentansprüche

1. Verbindungselement zur Verbindung von Zellen (10, 15) zu Akkumulatoren, bestehend aus einem aus leitendem Material gebildeten plattenförmigen Element (2), das mindestens zwei einander gegenüberliegende Zungen (4, 7; 5, 6) aufweist, welche Zungen (4, 5, 6, 7) jeweils eine Verbindungsstelle aufweisen, mit welcher die jeweilige Zunge (4, 5, 6, 7) in deren Endbereich (8) mit dem entsprechenden Pol der Zelle (10, 15) verbindbar ist, **dadurch gekennzeichnet, dass** die jeweilige Verbindungsstelle jeder Zunge (4, 5, 6, 7) des plattenförmigen Elements (2) aus einer Ausbuchtung (9) besteht, welche eine Länge (I) aufweist, die mindestens dem 1,5 - fachen der Breite (b) der Ausbuchtung (9) entspricht, über welche die Zungen (4, 5, 6, 7) des Verbindungselements (1) durch Widerstandsschweissen mit dem jeweiligen Pol der entsprechenden Zelle (10, 15) verbindbar sind.

2. Verbindungselement nach Anspruch 1, **dadurch gekennzeichnet, dass** die Ausbuchtung (9) jeder Zunge (4, 5, 6, 7) mittig angebracht ist und eine Breite (b) aufweist, die etwa einem Drittel der Zungenbreite entspricht.

3. Verbindungselement nach Anspruch 1 oder 2, **dadurch gekennzeichnet, dass** die Länge (I) jeder Ausbuchtung (9) einer Zunge (4, 5, 6, 7) doppelt so gross ist, wie die Breite (b) der Zunge (4, 5, 6, 7).

4. Verbindungselement nach einem der Ansprüche 1 bis 3, **dadurch gekennzeichnet, dass** dieses aus einem elektrolytisch vernickeltem Kaltband herstellbar ist, vorzugsweise durch Ausstanzung.

5. Verbindungselement nach einem der Ansprüche 1 bis 4, **dadurch gekennzeichnet, dass** die Ausbuchtung (9) durch Prägung erreichbar ist.

6. Verbindungselement nach einem der Ansprüche 1 bis 5, **dadurch gekennzeichnet, dass** diese mit jeweils zwei parallel zueinander verlaufenden, parallel nebeneinander angeordneten Zungen (4, 5, 6, 7) ausgestattet sind.

7. Verbindungselement nach einem der Ansprüche 1 bis 5, **dadurch gekennzeichnet, dass** diese einen Mittelteil (3) aufweisen, an dessen Enden jeweils zwei Paare (13, 14) von Zungen (4, 5, 6, 7) angebracht sind, wobei jeweils ein Paar (13) von Zungen (4, 5, 6, 7) parallel und zum andern Paar (14) gegenüberliegend angeordnet ist.

8. Verbindungselement nach Anspruch 7, **dadurch gekennzeichnet, dass** die jeweils zwei Paare (13, 14) von Zungen (4, 5, 6, 7) bezüglich des Mittelteils (3) um einen Winkel (α) geneigt sind.

9. Verbindungselement nach Anspruch 8, **dadurch gekennzeichnet, dass** der Winkel (α), um welchen die jeweils zwei Paare (13, 14) von Zungen (4, 5, 6, 7) gegenüber dem Mittelteil (3) geneigt sind, etwa 35° bis 50°, vorzugsweise etwa 42° beträgt.
